# EUROPÄISCHE PATENTSCHRIFT

(11) **EP 1 096 224 B1**
(45) Veröffentlichungstag und Bekanntmachung des Hinweises auf die Patenterteilung: **10.10.2007**
(21) Anmeldenummer: 00810908.4
(22) Anmeldetag: 03.10.2000
(51) Int. Cl.: G01C 15/00

(54) **Rotationsbaulaser**
Rotational construction laser
Laser rotatif pour la construction

(30) Priorität: 29.10.1999 DE 19952390
(43) Veröffentlichungstag der Anmeldung: 02.05.2001
(73) Patentinhaber: HILTI Aktiengesellschaft, 9494 Schaan (LI)
(72) Erfinder: Kousek, Heinz, 6800 Feldkirch (AT); Spiegel, Armin, 9442 Berneck (CH)
(74) Vertreter: Wildi, Roland

(56) Entgegenhaltungen:
- EP-A- 0 488 046
- EP-A- 0 957 338
- WO-A-99/35465
- US-A- 4 035 084
- US-A- 5 784 155
- US-A- 5 903 345
- PATENT ABSTRACTS OF JAPAN vol. 009, no. 203 (P-381), 21. August 1985 (1985-08-21) -& JP 60 067812 A (TOSHIHIRO TSUMURA;OTHERS: 01), 18. April 1985 (1985-04-18)

## Beschreibung

Die Erfindung betrifft einen Rotationsbaulaser mit rotierbarem Laserstrahl gemäss dem Oberbegriff des Patentanspruchs 1.

Baulaser mit rotierbarem Laserstrahl werden vor allem in der Bauindustrie, im Installations- und Elektrohandwerk und im damit verwandten Gewerbe als Hilfsmittel eingesetzt, um auf Decken, Wänden und Böden horizontale und vertikale Linien festzulegen bzw. um im Raum horizontal, vertikal oder beliebig schief verlaufende Ebenen exakt zu definieren. Dies ist beispielsweise für das Ausrichten von Wänden, Türstöcken und Fenstern oder auch für die Bestimmung des Verlaufs von Leitungsinstallationen erforderlich. Die aus dem Stand der Technik bekannten, gattungsgemässen Rotationsbaulaser weisen eine in einem Gehäuse angeordnete Lasereinheit auf, deren emittierter Laserstrahl von einer Umlenkeinrichtung etwa um 90° umlenkbar ist. Die Umlenkeinrichtung ist um eine Drehachse rotierbar, die mit der optischen Achse zusammenfällt. Bei der Rotation der Umlenkvorrichtung beschreibt der senkrecht zur Drehachse umgelenkte Laserstrahl eine Ebene. Die Rotationsachse des Laserstrahls ist durch servogesteuerte Einrichtungen in zwei zueinander senkrecht verlaufenden Ebenen neigbar, damit Unebenheiten der Stellfläche ausgeglichen werden können bzw. bei Bedarf schiefe Ebenen im Raum dargestellt werden können.

Als Beispiele für derartige Rotationsbaulaser werden die EP-A-0 787 972 oder auch die EP-A-0 854 351 genannt, in denen verschiedene Gerätevarianten beschrieben sind, die es ermöglichen, die Fehllage der Rotationsebene von einer Referenzlinie an einer speziell ausgebildeten Zieltafel zu erkennen. Bei Erkennen einer Fehllage wird gemäss der EP-A-0 787 972 dem Anwender am Gerät die Richtung signalisiert, in der er das Gerät schwenken und ausrichten muss, um die korrekte Lage der vom rotierenden Laser angezeigten Ebene einzustellen. Bei dem beispielsweise aus der EP-A-0 854 351 bekannten Baulaser sorgen Servosysteme dafür, dass die Rotationsebene des Laserstrahls automatisch in die Richtung der auf einer speziell ausgebildeten Zieltafel angebrachten Referenzlinie ausgerichtet wird.

Bei den aus dem Stand der Technik bekannten Rotationsbaulasern kann, wie in den zitierten Druckschriften erwähnt, die Rotationsachse in zwei Richtungen geneigt werden. Durch die Position des Strahlaustrittes am Gerät bleibt die Lage der Ebene jedoch festgelegt. Soll die vom rotierenden Laserstrahl aufgespannte Ebene zu sich parallel verschoben werden, muss der Baulaser selbst lateral verschoben werden. Beispielsweise kann es erforderlich sein, die Einstellung einer horizontalen Ebene durch eine am Bauwerk vorgegebene Höhenmarke ständig zu überwachen und bei instabiler Aufstellung des Geräts nachzustellen. Für diesen Anwendungsfall wird üblicherweise die Höhenverstellung an einem Stativ oder die Schiene einer Wandhalterung verwendet. Im Fall einer detektierten Fehllage erfolgt die Nachregelung der Einstellung manuell. Ist die anzuvisierende Höhenmarke mehrere Meter vom Baulaser entfernt, was bei einer Aufstellung mittig in einem grösseren Raum durchaus vorkommen kann, ist die Übereinstimmung von Laserstrahl und Höhenmarke von einem Standpunkt am Gerät aus nicht immer erkennbar. Entweder ist eine Hilfskraft zur Einweisung erforderlich, oder der Anwender muss zwischen dem Aufstellort des Baulasers und der Höhenmarke hin- und herlaufen, bis die Position des Gerätes wieder nachgeregelt ist.

In einer weiteren Anwendung für gattungsgemässe Baulaser soll eine vertikale Ebene nach einer horizontalen Richtung, beispielsweise der Bauwerksachse, ausgerichtet werden, die durch eine oder zwei am Bauwerk angeordnete Zielmarkierungen vorgegeben ist. In diesem Fall wird der Baulaser am Fussboden aufgelegt und manuell nach den beiden, an gegenüberliegenden Wänden angebrachten Marken ausgerichtet. Dazu wird zunächst durch Drehen des Baulasers um eine vertikale Achse eine Marke angezielt und dann die Fehllage der vom rotierenden Laserstrahl aufgespannten Ebene von der zweiten Marke gemessen. Entsprechend dem Verhältnis der beiden Entfernungen vom Baulaser zu den beiden Marken wird die Lage des Baulasers durch Verschieben um eine meist geschätzte Distanz nachkorrigiert. Dieses Verfahren wird solange wiederholt, bis die vom Laserstrahl aufgespannte Ebene durch beide Marken verläuft. Eine aus den genannten Druckschriften bekannte Neigung der Rotationsachse um eine vertikale Achse kann zur automatischen Ausrichtung auf eine der Zielmarken herangezogen werden. Allerdings stellt dies nur einen Teilschritt des Verfahrens dar, der für die exakte Ausrichtung der darzustellenden, vertikalen Ebene erforderlich ist.

In einem weiteren Anwendungsfall, beispielsweise bei Altbausanierungen mit im allgemeinen schiefen Wänden und/oder Decken, kann es erforderlich sein, eine windschiefe Ebene durch drei am Bauwerk angeordnete Marken zu legen. Dies erfolgt mit den bekannten Baulasern auf ähnliche Art wie die Ausrichtung einer vertikalen Ebene nach einer Bauwerksachse, indem zusätzlich auf eine dritte Marke abgestellt wird, was praktisch auf ein mehrmaliges Probieren und schrittweises Annähern hinausläuft.

Mit den aus dem Stand der Technik bekannten Baulasern sind die drei geschilderten Anwendungsfälle, die zu den häufigsten Anwendungen der Baulaser gehören, nur verhältnismässig umständlich und zeitaufwändig durchzuführen. Es besteht daher ein Bedarf nach einem Baulaser, der es ermöglicht, diese drei Hauptanwendungsfälle einfacher, schneller und komfortabler durchzuführen.

Nach der JP60067812 weist ein Rotationsbaulaser mit einer innerhalb eines Gerätegehäuses angeordneten Lichtquelle zur Erzeugung eines Laserstrahls eine Umlenkeinrichtung für den Laserstrahl auf, die motorisch um eine Drehachse, die vorzugsweise mit der optischen Achse zusammenfällt, rotierbar ist und in einer Gehäuseeinheit angeordnet ist, welche wenigstens ein Lichtaustrittsfenster für den Laserstrahl aufweist, mit einer Detektionseinrichtung für von einer Anzeigemarke reflektiertes und durch das Lichteintrittsfenster in die Gehäuseeinheit eingestrahltes Laserlicht und mit einer mit der Detektionseinrichtung verbundenen Auswerte- und Steuereinheit, mit der nach Massgabe des detektierten rekflektierten Laserlichts Steuersignale für Verkippeinrichtungen zur Verkippung der Drehachse der Umlenkeinrichtung erzeugbar sind.

Nach der US4035084 überragt zusätzlich das Lichtaustrittsfenster das Gerätegehäuse wenigstens teilweise.

Nach der nachveröffentlichten EP0957338 ist zusätzlich die Umlenkeinrichtung automatisch längs der Rotationsachse axial verstellbar.

Die Lösung dieser Aufgabe besteht in einem Baulaser mit rotierbarem Laserstrahl, der zusätzlich die im kennzeichnenden Abschnitt des Patentanspruchs 1 angeführten Merkmale aufweist. Vorteilhafte Weiterbildungen und/oder bevorzugte Varianten der Erfindung sind Gegenstand der abhängigen Patentansprüche. Der erfindungsgemäss ausgebildete Rotationsbaulaser ist mit einer innerhalb eines Gerätegehäuses angordneten Lichtquelle zur Erzeugung eines Laserstrahls und einer Umlenkeinrichtung für den Laserstrahl ausgestattet. Die Umlenkeinrichtung ist motorisch um eine Drehachse rotierbar, die mit der optischen Achse zusammenfällt, und in einer Gehäuseeinheit angeordnet, die das Gerätegehäuse wenigstens teilweise überragt und wenigstens ein Lichtaustrittsfenster für den Laserstrahl aufweist. Weiters weist der Rotationsbaulaser innerhalb des Gerätegehäuses eine Detektionseinrichtung für von einer Anzeigemarke reflektiertes und durch das Lichteintrittsfenster in die Gehäuseeinheit eingestrahltes Laserlicht auf. Die Detektionseinrichtung ist mit einer Auswerte- und Steuereinheit verbunden, mit der nach Massgabe des detektierten rekflektierten Laserlichts Steuersignale für die Verkippung der Drehachse der rotierbaren Umlenkeinrichtung erzeugbar sind. Die Auswerte- und Steuereinheit ist zudem mit automatisch betätigbaren Einrichtungen verbunden, mit deren Hilfe die Umlenkeinrichtung für den Laserstrahl nach Massgabe des detektierten, von der Anzeigemarke reflektierten Laserlichts gegenüber einer Ausgangsstellung auch axial verstellbar ist.

Durch die erfindungsgemässe Ausbildung ist dem Rotationsbaulaser ein weiterer Freiheitsgrad verliehen, der die Einstellung des Geräts und die Ausrichtung auf an einem Bauwerk angebrachten Referenzmarken vereinfacht. Der erfindungsgemässe

Rotationsbaulaser basiert auf den Geräten, wie sie in den eingangs genannten Druckschriften, EP-A-0 787 972 oder EP-A-0 854 351 oder auch in der US-A-5,784,155 beschrieben sind. Durch die Erfindung wird die Grundausstattung dieser gattungsgemässen Geräte, die eine Sensorik, Aktuatoren für die Rotation und die Verstellung der Neigung der Rotationsachse und die zugeordneten Servo-Systeme umfasst, durch die automatischen Einrichtungen für die achsiale Verschiebung der Umlenkeinrichtung für den Laserstrahl und die damit verbundenen Elemente der Auswerte- und Steuereinheit erweitert.

Für die Einstellung der Neigung der Rotationsachse der Umlenkeinrichtung für den Laserstrahl umfasst ein aus der US-A-5,784,155 bekannter Rotationsbaulaser drei orthogonale Nivellier-Sensoren in den drei kartesischen Koordinatenrichtungen. Ein Schwerkraftschalter dient zur Groberkennung, ob das Gerät eher horizontal oder vertikal aufgestellt ist. Für den Fall, dass ihr sensitiver Bereich gross genug ausgelegt ist, kann diese Aufgabe auch von den Nivellier-Sensoren wahrgenommen werden. Ein Winkel-Encoder an der rotierbaren Umlenkeinrichtung dient zur Bestimmung der Richtung, in der eine Zieltafel vom Gerät aus gesehen wird, damit die Hauptneigungsrichtung festgelegt werden kann. Eine Detektionseinrichtung dient als Empfänger zum Erkennen von reflektierenden Zieltafeln und deren Kodierung. Die erfassten Signale werden an die Auswerte- und Steuereinheit weitergeleitet, welche die Ablage der momentanen Rotationsebene von der durch die Zieltafel(n) festgelegten Sollposition bestimmen und Steuersignale für die Aktuatoren für die Neigungsverstellung erzeugen. Die erfindungsgemässe Ergänzung besteht in der Bereitstellung von automatisch betätigbaren Einrichtungen zur axialen Verstellung der Umlenkeinrichtung und in einer Modifikation der Auswerte- und Steuereinheit, damit die erforderliche axiale Ablage erkannt und die erforderlichen Steuersignale zur Höhen- oder Lateralverstellung erzeugbar sind.

Die erfindungsgemässe Ausstattung des Rotationsbaulasers orientiert sich an der Arbeitsweise eines Bauhandwerkers. Dieser löst das Problem, eine Ebene im Raum aufzuspannen, bei der die Austrittsebene des Laserstrahls im allgemeinen nicht im Ursprung des Plankoordinatensystems liegt, nicht aus der Sicht des Mathematikers, indem er eine Koordinaten-Transformation durchführt. Vielmehr geht der Bauhandwerker für die Ausrichtung des Rotationsbaulasers zur Darstellung der Ebene im Raum von Bestimmungselementen aus, die bei der Justierung unverändert bleiben und mit einer einfachen Parallelverschiebung zu realisieren sind. Eine häufig erforderliche Aufgabe für den Bauhandwerker ist das Aufspannen und Ausrichten einer vertikal verlaufenden Ebene. Bei diesem Anwendungsfall ist eine Richtung der Ebene durch die Forderung gegeben, dass sie parallel oder normal zu einer Gebäudeachse verlaufen soll. Die Richtung der Gebäudeachse wird üblicherweise an der Bauwerkskontur abgenommen und um ein Mass parallel verschoben, das dem Plan entnommen wird. Parallelverschieben erfolgt am Bau fast immer durch Abschlagen der Normaldistanz zur gegebenen Flucht an zwei möglichst auseinanderliegenden Stellen, wenn möglich an zur Achse normalen Konturen. Diese liegen im allgemeinen in diametraler Richtung zum Aufstellungsort des Rotationsbaulasers. Der Aufstellungsort des Geräts ist dann so einzurichten, dass der Strahl beide Marken trifft. Die vertikale Richtung wird dabei vom Baulaser vorgegeben und/oder beibehalten, sodass das Gerät nicht direkt in die Verbindungslinie beider Marken, sondern nur in der vertikalen Ebene durch diese Linie gebracht werden muss. Mit dem erfindungsgemäss ausgestatteten Rotationsbaulaser werden bei vertikaler Aufstellung die zwei Zielmarken erfasst, die innerhalb einer vorzugebenden Toleranz zur Horizontalen und in entgegengesetzter Richtung vom Gerät gesehen werden. Die Ausrichtung des Geräts erfolgt durch eine automatische Aktivierung der Stelltriebe für die Verstellung der Neigung der Rotationsachse und der axialen Höhenlage der Umlenkeinrichtung des Laserstrahls nach Massgabe des detektierten, von den Zielmarken reflektierten Laserlichts. Die Feststellung der Fehllage erfolgt gemäss den gattungsgemässen Geräten durch die detektierten Verhältnisse der von verschiedenen Bereichen der Zielmarken unterschiedlich polarisierten Lichtanteile des reflektierten Laserlichts. Weisen die Abweichungen der beiden Zielmarken gleiche Vorzeichen auf, wird zunächst die axiale Höhenverstellung aktiviert. Sobald eine der beiden Zielmarken das Vorzeichen der Abweichung wechselt, werden abwechselnd oder gleichzeitig die Stelltriebe für die Verstellung der Neigung der Rotationsachse und für die axiale Verschiebung der Umlenkeinrichtung aktiviert. Damit ist sichergestellt, dass nicht durch eine zu früh eingeleitete Neigung eine der Zielmarken aus dem Erfassungsbereich verloren wird.

Die mit Abstand häufigste Aufgabe stellt das Aufspannen einer horizontalen Ebene durch eine am Bauwerk angezeichnete Höhenmarke dar. Zwei voneinander verschiedene, nicht parallele Richtungen in der Ebene sind durch die Forderung der Horizontalität vorgegeben. Der dritte Bestimmungspunkt ist durch die Höhenmarke festgelegt. Dazu wird die Aufstellung des Rotationsbaulasers am Boden eines Gebäudes derart gewählt, dass eine weitgehend schattenfreie Überstreichung des Arbeitsbereiches gegeben ist. Die Höhe wird mit den bekannten Geräten im allgemeinen durch ein Teleskopstativ oder eine Wandhalterung mit vertikaler Schiene von Hand eingestellt. Das Gerät behält dabei seine horizontale Ausrichtung bei bzw. korrigiert sie automatisch nach. Muss der Aufstellungsort gewechselt werden, wird die Höhe nach einem bereits markierten Punkt der vorigen Aufstellung neu eingestellt. Eine sogenannte Schockabschaltung reagiert auf rasche Auslenkungen des Gerätes innerhalb einer gewissen Toleranz. Dadurch soll ein fehlerhaftes Weiterarbeiten nach einem versehentlichen Anrempeln am Gerät bzw. am Stativ verhindert werden. Einem langsamen Absinken des Gerätes, beispielsweise bei einem schlecht arretierten Stativ, das mit den Geräten des Stands der Technik bislang nicht erkannt und korrigiert werden konnte, kann mit dem erfindungsgemäss ausgestatteten Rotationsbaulaser entgegengewirkt werden. Die Grundlage dafür bietet die axiale Höhenverstellbarkeit der Umlenkeinrichtung für den Laserstrahl. Die Höhenmarke, auf die der Laserstrahl ausgerichtet ist, verbleibt während der Bearbeitung des gesamten Arbeitsfeldes an der Stelle am Bauwerk. Das Gerät stellt kontrolliert über den von der Marke reflektierten Laserstrahl laufend seine Lage und stellt sich automatisch auf die exakte Höhe ein. Die eingestellte Höhe wird auch beibehalten, falls sich die Stativhöhe unbeabsichtigt verändert. Bei einem Ortswechsel des Stativs innerhalb des Sichtbereichs der Höhenmarke stellt das Gerät die Höhe seiner Umlenkeinrichtung für den Laserstrahl wieder automatisch nach der gleichen Referenzmarke ein.

Ein weniger häufig auftretender Anwendungsfall des erfindungsgemässen Rotationsbaulasers ist das Aufspannen einer windschiefen Ebene durch drei Punkte, die durch Zielmarken am Bauwerk festgelegt sind. Dieser Fall kommt beispielsweise bei Altbausanierungen vor. Es soll eine Ebene als "best fit" in die gegebene Struktur, beispielsweise ein Gewölbe, eine Kaverne, ein Raum mit schräg verlaufendem Fensterband, ein Dachschrägenausbau etc., eingezogen werden. Oft ist das System sogar überbestimmt, d.h. die Einpassung ist ein visueller Ausgleich über mehr als drei Punkte. Während mit den aus dem Stand der Technik bekannten Geräten die Lösung nur iterativ, d.h. durch Probieren gefunden wurde, vereinfacht der erfindungsgemäss ausgestattete Rotationsbaulaser die Darstellung der gesuchten Ebene. Dazu erfolgt alternierend eine axiale Verschiebung der Rotationsachse und eine Verstellung der Neigung der Rotationsachse bis der rotierende Laserstrahl alle drei Zielmarkierungen an den Sollpositionen passiert. Weisen die beiden Zielmarkierungen, die am nächsten zu 180° zueinander liegen, ein gleiches Vorzeichen der Abweichung von der Sollposition auf, erfolgt eine axiale Verstellung. Gleichzeitig oder auch intermittierend erfolgt eine Verstellung der Neigung der Drehachse nach der dritten Zielmarkierung. Auf diese Weise wird verhindert, dass die dritte Zielmarkierung aus dem erfassten Bereich verloren geht. Sobald die Abweichung einer der beiden Zielmarken von der Sollposition das Vorzeichen wechselt, wird gleichzeitig oder intermittierend die Neigung der Rotationsachse in die zweite Richtung nachgeregelt und dabei die axiale Verschiebung angepasst. Weisen hingegen die beiden Zielmarkierungen, die am nächsten zu 180° zueinander liegen, ein entgegengesetztes Vorzeichen der Abweichungen auf, wird zunächst die Drehachse solange geneigt, bis eine der Abweichungen das Vorzeichen wechselt. Falls die dritte Zielmarke näher zu jener mit der Abweichung mit entgegengesetztem Vorzeichen liegt, wird diese Fehllage bei der Neigung der Drehachse mitberücksichtigt, andernfalls bleibt diese Fehllage zunächst unbeachtet. Sobald die Fehllage bezüglich einer der beiden erstgenannten Zielmarkierungen das Vorzeichen ändert, werden Stelltriebe für die axiale Verschiebung und die für die Neigung in die zweite Richtung nachgeregelt.

Weitere Anwendungsmöglichkeiten des erfindungsgemäss ausgebildeten Rotationsbaulasers umfassen die folgenden Einstellvarianten:

Wird eine Zielmarke für eine horizontale Ausrichtung vom Gerät identifiziert und eine diesbezügliche Fehllage festgestellt, dann erfolgt eine Aktivierung der automatischen Einrichtung zur axialen Verschiebung der Umlenkeinrichtung für den Laserstrahl. Waren zu Beginn dieses axialen Verstellvorgangs ein oder zwei Nivelliersysteme zur Kontrolle der Neigung der Rotationsachse abgeglichen, so bleibt das jeweilige Nivelliersystem aktiv. Auf diese Weise werden etwaige Nivellierfehler während und auch nach der axialen Verstellung automatisch korrigiert.

Bei Detektion einer Fehllage einer anzuzeigenden senkrecht verlaufenden Ebene gegenüber einer Zielmarkierung wird die Richtung der Fehllage ermittelt und dann die Rotationsachse so geneigt, dass die Richtung der maximalen Neigung zu dieser Zielmarkierung zeigt.

Werden Fehllagen von einer horizontal und einer vertikal angeordneten Zielmarke festgestellt, erfolgt zunächst eine axiale Verschiebung und eine Verstellung der Neigung der Rotationsachse derart, dass die Hauptneigungsrichtung normal auf die Richtung zur horizontalen Zielmarke steht. Ist die Ausgangssituation die horizontale Ebene, ist damit sichergestellt, dass die Umlenkeinrichtung für den Laserstrahl auf gleicher Höhe wie die horizontale Zielmarke bleibt. Ist die Ausgangssituation die vertikale Ebene und die Grundausrichtung des Geräts derart, dass sich die horizontale Zielmarke innerhalb einer vorgegebenen Toleranz oberhalb oder unterhalb des Gerätes befindet, wird die entstehende Ebene durch das Lot durch die horizontale Zielmarke in Richtung der senkrechten Zielmarke ausgerichtet.

Werden bei nicht vertikaler Aufstellung des erfindungsgemässen Rotationsbaulasers zwei vertikal angeordnete Zielmarken erfasst, die innerhalb einer vorgegebenen Toleranz kleiner 90° vom Gerät aus gesehen werden, wird der Stelltrieb wenigstens einer Neigungsverstellung für die Drehachse der mit der Umlenkeinrichtung für den Laserstrahl verbundenen Welle aktiviert, bis beide Zielmarken in der Sollposition getroffen werden. Die axiale Verschiebung bleibt unverändert. Es wird damit eine Ebene aufgespannt, die windschief durch die gegebene Position der Umlenkeinrichtung für den Laserstrahl und die beiden Zielmarken geht.

Die Einstellprozedur erfolgt in zeitlicher Abfolge derart, dass der Rotationsbaulaser zunächst mit wenigen Umdrehungen die angebotenen Zielmarken erfasst. Ist nur eine oder sind zwei Zielmarken, die unter etwa 90° zueinander ausgerichtet sind, vorhanden, wird die Rotation der Welle im Gerätegehäuse vorzugsweise derart gesteuert, dass es diesen begrenzten Bereich abscannt. Andernfalls läuft der Laserstrahl die volle Drehung durch. Erst nachdem der Abgleich erfolgt ist, reagiert das Gerät auf ein gegebenenfalls im Strahlengang angeordnetes Scanning-Target. Sobald das Scanning-Target den Strahl wieder freigibt, läuft der Strahl wieder die volle Drehung. Findet er an den ursprünglichen Positionen die Zielmarken in nicht abgeglichener Position, geht das Gerät in den Justiermodus über und gleicht neuerlich ab.

In einer ersten Variante des erfindungsgemässen Rotationsbaulasers umfassen die automatisch betätigbaren Einrichtungen ein motorisch höhenverstellbares Stativ, dessen Stelltrieb durch die von der Auswerte- und Steuereinheit gelieferten Steuersignale betreibbar ist. Diese Gerätevariante erfordert in erster Linie nur eine Modifikation der Auswerte- und Steuereinrichtung derart, dass diese aus den detektierten Fehllagen gegenüber einer oder mehreren Zielmarken Steuersignale generiert, welche die motorische Höhenverstellung des Geräts bewirken.

Die Kopplung des Rotationsbaulasers mit dem Stelltrieb für die Höhenverstellung des Stativs kann einfach über ein Verbindungskabel erfolgen. In einer vorteilhaften Variante der Erfindung weist das Stativ eine Montageplatte auf, die mit Anschlusskontakten versehen ist. Die Anschlusskontakte sind bei der Montage des Baulasers auf der Montageplatte mit korrespondierend am Gerätegehäuse vorgesehenen Steckkontakten verbindbar, über die der Stelltrieb des Stativs mit der Auswerte- und Steuereinheit und gegebenenfalls mit einer Energieversorgung verbindbar ist. Durch diese vorteilhafte Ausbildung des Geräts sind lose herabhängende Kabel und dergleichen vermieden. Auf eine gesonderte Energieversorgung für den Stelltrieb des Stativs kann verzichtet werden; der Stelltrieb für die Höhenverstellung des Stativs ist über die Energieversorgung des Rotationsbaulasers betreibbar. Der Umfang der axialen Verstellbarkeit bzw. Höhenverstellbarkeit ist durch das Stativ vorgegeben und beträgt beispielsweise etwa ± 50 cm.

In einer alternativen Ausführungsform des erfindungsgemässen Rotationsbaulasers umfassen die automatisch betätigbaren Einrichtungen eine Schiene, auf der das Gerätegehäuse derart montierbar ist, dass die optische Achse im wesentlichen parallel zur Schiene verläuft. Bei einer detektierten Fehllage ist das Gerätegehäuse nach Massgabe der von der Auswerte- und Steuereinheit gelieferten Steuersignale motorisch entlang der Schiene versetzbar.

Der Rotationsbaulaser kann ähnlich zu dem anhand der Statiwariante beschriebenen Ausführungsbeispiel ausgebildet sein und auf eine auf der Schiene motorisch verschiebbaren Montageplatte montierbar sein. In einer zweckmässigen Variante der Erfindung ist das Gerätegehäuse mit Stützrollen und motorisch betreibbaren Antriebsrollen ausgestattet, die durch die Steuersignale der Auswerte- und Steuereinheit betreibbar sind. Die Stützrollen und Antriebsrollen verleihen dem Gerät eine Eigenbeweglichkeit entlang der Schiene, die nach Massgabe der Steuersignale von der Auswerte- und Steuereinheit erfolgt. Der Antrieb erfolgt beispielsweise über ein oder mehrere Reibräder oder mit einer Aussenverzahnung versehene Rollen, die sich an der Schiene abstützen. Der axiale Verschiebeumfang ist durch die Länge der Schiene gegeben und beträgt beispielsweise etwa ± 50 cm.

In einer weiteren Ausführungsvariante der Erfindung sind die automatisch betätigbaren Einrichtungen für die axiale Verstellung der Lage der Umlenkeinrichtung für den Laserstrahl in das Gerätegehäuse integriert. Dazu ist die Umlenkeinrichtung für den Laserstrahl auf einer rotierbaren Plattform angeordnet, die nach Massgabe der Steuersignale der Auswerte- und Steuereinheit axial verstellbar ist. Bei dieser Variante des Rotationsbaulasers sind keine speziellen Zusatzeinrichtungen, wie beispielsweise eine Schiene oder ein motorisch höhenverstellbares Stativ, erforderlich. Sämtliche für die axiale Verstellung erforderlichen Bestandteile sind bereits in das Gerätegehäuse integriert. Der axiale Verstellumfang der Umlenkeinrichtung bei dieser Gerätevariante mit in das Gerätegehäuse integrierten Stelleinrichtung beträgt beispielsweise bis ± 65 mm gegenüber einer Ausgangslage.

Die Plattform mit der Umlenkeinrichtung für den Laserstrahl ist in der das Gerätegehäuse überragenden Gehäuseeinheit angeordnet. Die Gehäuseeinheit kann gesamthaft rotierbar sein. In diesem Fall reicht ein einziges Lichtaustrittsfenster für den umgelenkten Laserstrahl aus. In einer zweckmässigen Ausführungsvariante des Geräts ist die Plattform innerhalb der Gehäuseeinheit höhenverstellbar. Die Gehäuseeinheit ist laternenartig ausgebildet und fest mit dem Gerätegehäuse verbunden. Diese Ausführungsvariante weist eine grössere Robustheit auf, da die rotierbare Welle innerhalb der Laterne gegen Stösse geschützt ist.

Damit der umgelenkte Laserstrahl weitgehend ungehindert rotieren kann, ist die laternenartige Gehäuseeinheit mit vier Lichtaustrittsfenstern ausgestattet, die sich im wesentlichen in axiale Richtung erstrecken. Damit der umgelenkte Laserstrahl über seinen gesamten axialen Verschiebeweg ungehindert aus der laternenartigen Gehäuseeinheit austreten kann, weisen die Fenster eine Höhe auf, die etwas grösser ist als die gesamte mögliche Verschiebestrecke. Vorzugsweise beträgt die Höhe der Fenster etwa 150 mm bis etwa 160 mm. Mit dieser Fensterhöhe lässt sich ein Verstellweg der Stelleinrichtung von ± 65 mm gegenüber einer Mittenposition ungehindert realisieren.

Damit auch ein senkrecht zu dem umgelenkten Laserstrahl verlaufender Lotstrahl darstellbar ist, weist die laternenartige Gehäuseeinheit mit Vorteil ein im wesentlichen senkrecht zur Drehachse der rotierbaren Welle verlaufendes weiteres Lichtaustrittsfenster auf. Die Umlenkeinrichtung für den Laserstrahl ist in diesem Fall gleichzeitig als Strahlteiler ausgebildet, um einen lotrechten Anteil des Laserstrahls zu erzeugen.

Aus Stabilitätsgründen ist die Plattform für die Umlenkeinrichtung über drei Punkte abgestützt. Wenigstens eine der Abstützungen ist dabei durch eine mit einem Stellmotor zusammenwirkende, axial angeordnete Gewindespindel gebildet. Dies erlaubt eine Feineinstellbarkeit der axialen Verstellung. Indem die Plattform auf drei Gewindespindeln abgestützt ist, die synchron von einem von der Auswerte- und Steuereinrichtung gesteuerten Stellmotor antreibbar sind, ist die Steifigkeit des Systems erhöht und kann einer unbeabsichtigten Verkippung der die Umlenkeinrichtung tragenden Plattform entgegengewirkt werden.

Eine am Gerätegehäuse angeordnete Eingabetastatur, die mit der Auswerte- und Steuereinheit verbunden ist, ermöglicht es, die Auswerte- und Steuereinheit auf spezielle Erfordernisse abzustimmen, beispielsweise um die Priorität von Neigungsverstellung und Oaxialer Verstellung zu verändern. Die Eingabetastatur kann auch dazu dienen, einzelne Verstellmodi bei Bedarf abzuschalten.

In einer Variante des Rotationsbaulasers ist innerhalb des Grätegehäuses eine weitere Laserlichtquelle angeordnet. Im Strahlengang der weiteren Laserlichtquelle ist eine zweite, rotierbare Umlenkeinrichtung vorgesehen, die in einer zweiten Gehäuseeinheit angeordnet ist, welche das Gerätegehäuse wenigstens teilweise überragt. Die zweite Gehäuseeinheit weist wenigstens ein Lichtaustrittsfenster für den zweiten Laserstrahl auf, welches gegenüber dem wenigstens einen Lichtaustrittsfenster der ersten Gehäuseeinheit um 90° geneigt angeordnet ist. Der derart ausgestattet Rotationsbaulaser ist in der Lage, bei Bedarf gleichzeitig zwei Ebenen im Raum darzustellen. In einer besonders zweckmässigen Variante eines derartigen Doppelkopfrotationsbaulasers ist auch die zweite Umlenkeinrichtung automatisch entlang ihrer Rotationsachse axial verstellbar. Die Verstellmittel entsprechen dabei den Verstellmitteln für die erste Umlenkeinrichtung.

Indem für die Umlenkeinrichtung für den Laserstrahl ein Pentaprisma eingesetzt wird, sind geringfügige Fehllagen der Rotationsachse des Pentaprismas gegenüber der optischen Achse einfach ausgleichbar. Dies vereinfacht die Justierung bei der Montage und kompensiert geringfügige Verschiebungen der Bauteile, die durch Stösse auf das Gerätegehäuse auftreten können. Das Pentaprisma kann bei Bedarf als Strahlteiler ausgebildet sein, um einen Teil des einfallenden Laserstrahls ungehindert passieren zu lassen, während ein zweiter Teil des Laserstrahls um 90° umgelenkt wird.

In einer vorteilhaften Ausführungsvariante des erfindungsgemässen Rotationsbaulasers sind die automatisch betätigbaren Einrichtungen zur axialen Verstellung der Umlenkeinrichtung mit Endgebern ausgestattet. Läuft das Gerät gegen eine Grenze des Einstellbereiches, gibt das Gerät optische und/oder akkustische Warnsignale ab. Die Warnsignale sind auch auslösbar, wenn hinsichtlich der Neigungswinkel der Rotationsachse der Verstellbereich überschritten wird.

Wird eine Anzahl von Marken bzw. eine Kombination von Marken erfasst, die zu einer Überbestimmung und damit zu widersprüchlichen Ergebnissen führt, ist das Gerät vorzugsweise mit Einrichtungen, beispielsweise optischen oder akkustischen Anzeigen, versehen, um den Anwender auf diese Situation aufmerksam zu machen.

Im folgenden wird die Erfindung unter Bezugnahme auf in den schematischen Zeichnungen dargestellte Ausführungsbeispiele näher erläutert. Die Darstellungen beschränken sich dabei auf die für das Verständnis der Erfindung wesentlichen Einzelheiten. Es zeigen in nicht massstabsgetreuer Darstellung:
- Fig. 1:: ein Blockschema eines Baulasers des Stands der Technik;
- Fig. 2: eine Zielmarke zum Einsatz in Verbindung mit einem Baulaser gemäss Fig. 1;
- Fig. 3: eine Schnittdarstellung eines ersten Ausführungsbeispiels des erfindungsgemässen Rotationsbaulasers;
- Fig. 4: eine Draufsicht der Stelleinrichtung für die Umlenkeinrichtung für den Laserstrahl;
- Fig. 5: eine Draufsicht auf die Umlenkeinrichtung;
- Fig. 6 - Fig. 8: Schnittdarstellungen des Rotationsbaulasers nach Fig. 3 in verschiedenen Stellungen der Umlenkeinrichtung;
- Fig. 9: eine Seitenansicht eines zweiten Ausführungsbeispiels der Erfindung;
- Fig.: 10 einen Schnitt des Ausführungsbeispiels nach Fig. 9 gemäss Schnittlinie X;
- Fig. 11: ein drittes Ausführungsbeispiel des erfindungsgemässen Rotationsbaulasers;
- Fig. 12: eine weitere Variante eines Rotationsbaulasers; und
- Fig. 13 und 14: zwei schematische Darstellungen von Anwendungen für einen Rotationsbaulaser gemäss der Erfindung.

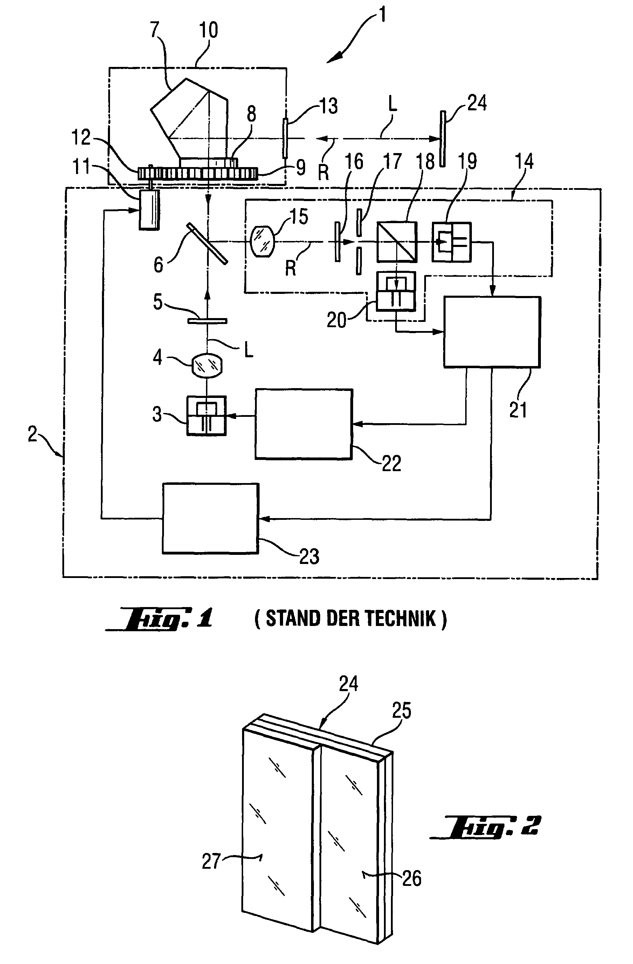

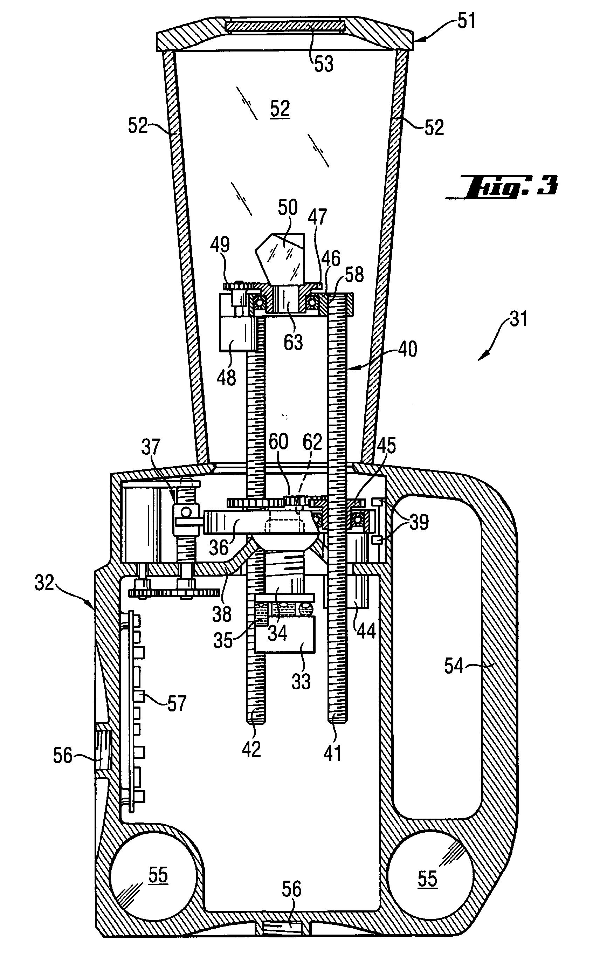

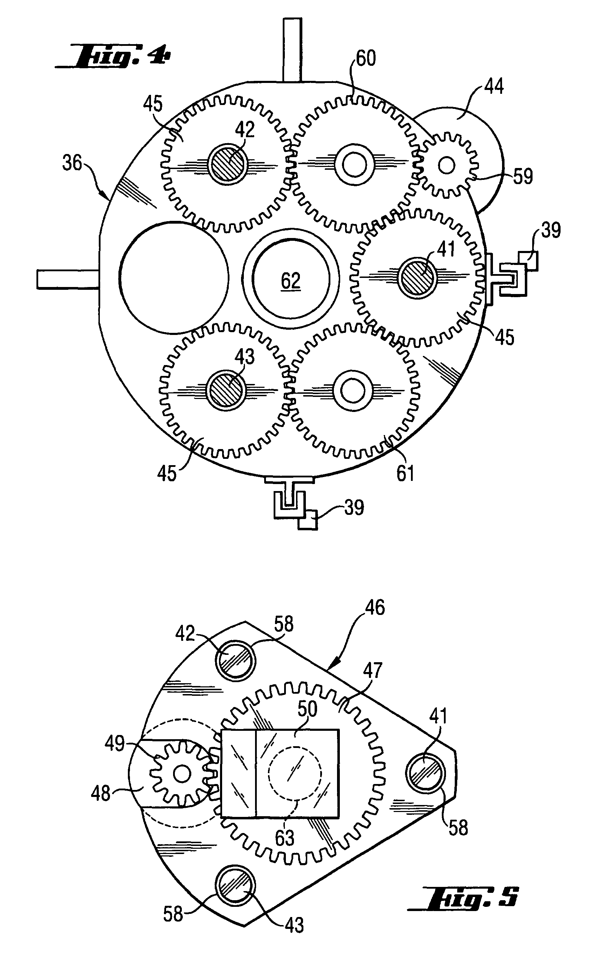

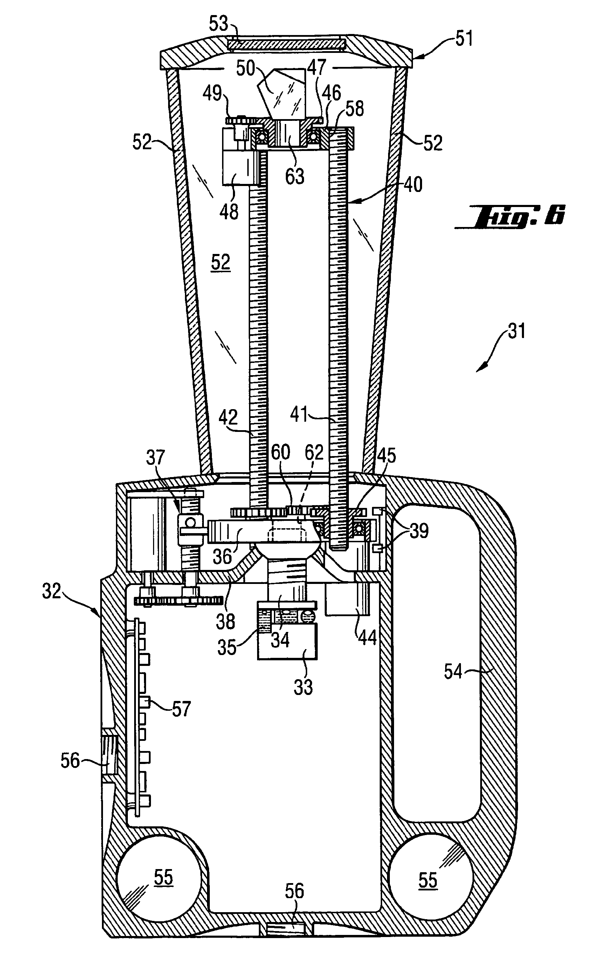

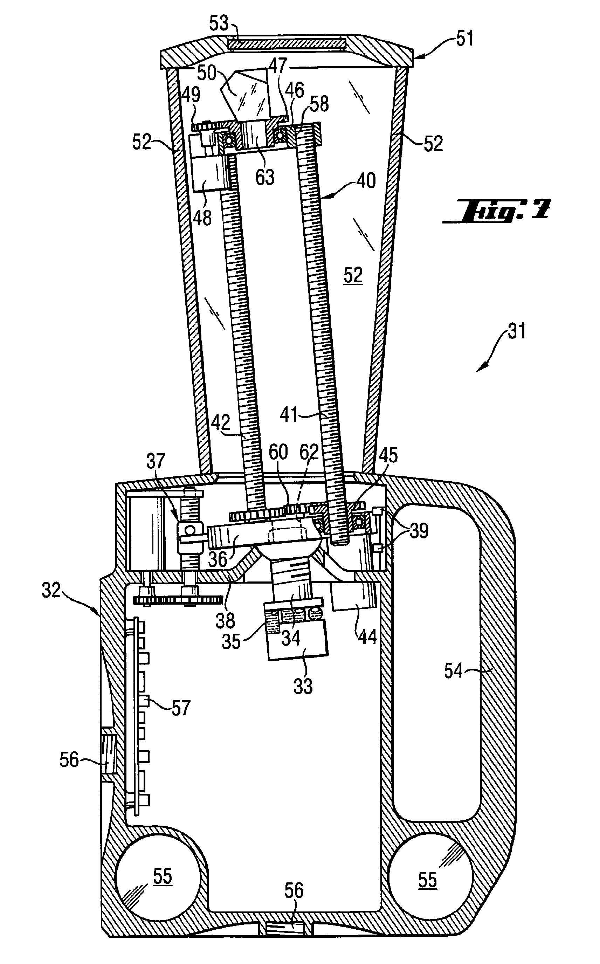

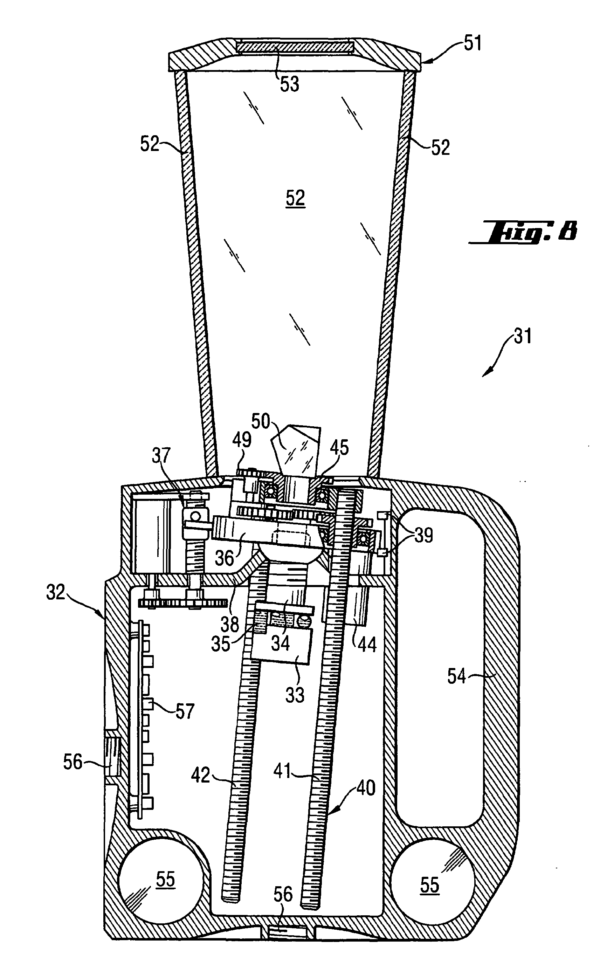

Fig. 1 zeigt ein Blockschema eines Rotationsbaulasers des Stands der Technik, der gesamthaft mit dem Bezugszeichen 1 versehen ist. Ein derartiges Gerät ist beispielsweise auch in der EP-A-0 854 351 beschrieben. Der Rotationsbaulaser 1 umfasst innerhalb eines Gerätegehäuses, das strichliert angedeutet ist und mit dem Bezugszeichen 2 versehen ist, eine Lichtquelle 3 für Laserlicht L, insbesondere eine Laserdiode. Der von der Laserdiode 3 abgestrahlte, linear polarisierte Laserstrahl L wird durch Kollimatorlinsensystem 4 geleitet, bevor es als Parallelstrahlenbündel auf ein λ/4 Plättchen 5 trifft. Beim Durchtritt durch das λ/4 Plättchen 5 wird der linear polarisierte Laserstrahl L zirkular polarisiert. Im Anschluss an das λ/4 Plättchen 5 gelangt der zirkular polarisierte Laserstrahl L durch einen in der optischen Achse angeordneten, halbdurchlässigen Spiegel 6 zu einer Umlenkeinrichtung 7, die vorzugsweise als Pentaprisma ausgebildet ist. Das Pentaprisma 7 ist auf einer mit einem Zahnkranz 9 verbundenen Plattform 8 angeordnet. Der Zahnkranz 9 wirkt mit einem Antriebsritzel 12 zusammen, das auf der Welle eines Elektromotors 11 angeordnet ist. Der Elektromotor 11 ermöglicht eine Rotation des Pentaprismas 7 um die optische Achse. Das Pentaprisma 7 ist in einer Gehäuseeinheit 10 untergebracht, die das Gerätegehäuse überragt und wenigstens ein Lichtaustrittsfenster 13 für den vom Pentaprisma 7 um etwa 90° umgelenkten Laserstrahl L aufweist. Im Fall eines einzigen Lichtaustrittsfensters 13 ist die Gehäuseeinheit 10 gemeinsam mit dem Pentaprisma 7 rotierbar, damit der Laserstrahl L eine Ebene beschreiben kann.

Der zirkular polarisierte Laserstrahl L trifft auf eine Zielmarkierung 24, die in Fig. 2 näher dargestellt ist. Die Zielmarkierung 24 ist plättchenförmig ausgebildet und besteht aus einem Trägersubstrat 25, dessen eine Flachseite mit einer reflektierenden Beschichtung 26 versehen ist. Ein Teil der Flachseite der Zielmarkierung 24 ist über der reflektierenden Beschichtung mit einer weiteren Beschichtung 27 versehen, die in Analogie zu einem λ/4 Plättchen ausgebildet ist. Der auf die Zielmarkierung 24 auftreffende, zirkular polarisierte Laserstrahl L wird von der reflektierenden Beschichtung 26 unverändert reflektiert. Trifft er auf die λ/4-Schicht 27, erfährt der Laserstrahl beim Passieren der λ/4-Schicht 27 eine Phasenverschiebung um λ/4. Nach der Reflexion an der reflektierenden Beschichtung 26 passiert der reflektierte Laserstrahl R die λ/4-Schicht 27 ein zweites Mal. Daher ist seine Phasenverschiebung gegenüber dem einfallenden Laserstrahl L insgesamt λ/2. Die zirkulare Polarisation bleibt unverändert.

Der reflektierte Laserstrahl R gelangt durch das Lichteintrittsfenster 13 der Gehäuseeinheit 10 wieder in den Rotationsbaulaser 1. Durch das Pentaprisma 7 wird der reflektierte Laserstrahl R zu dem halbdurchlässigen Spiegel 6 umgelenkt und von dort zu einer Detektionseinrichtung 14 abgelenkt. Am Eingang der Detektionseinrichtung 14 ist ein Kondensorlinsensystem 15 angeordnet, das den reflektierten Laserstrahl R auf die nachfolgenden Detektoren, insbesondere Photodioden, fokussiert. Im Anschluss an das Kondensorlinsensystem 15 ist ein weiteres λ/4 Plättchen 16 angeordnet. Beim Passieren des weiteren λ/4 Plättchens 16 wird der zirkular polarisierte Laserstrahl R wieder linear polarisiert. Abhängig davon, ob der reflektierte Laserstrahl von der reflektierenden Beschichtung 26 allein reflektiert worden ist oder zusätzlich noch die λ/4-Schicht 27 der Zielmarkierung passiert hat, unterscheidet sich die Polarisationsrichtung des linear polarisierten, reflektierten Laserstrahls R gemäss dem Phasenunterschied um 90°. Der reflektierte Laserstrahl R gelangt zu einem Strahlteiler 18, der den reflektierten Laserstrahl

R je nach Polarisationsrichtung entweder zu der ersten Photodiode 19 passieren lässt oder zu der zweiten Photodiode 20 umlenkt. Eine vor dem Strahlteiler 18 angeordnete Lochblende 17 blendet Fehllicht oder nicht in der optischen Achse ankommendes Licht aus.

Die Photodioden 19, 20 sind mit einer Auswerte- und Steuereinheit 21 verbunden, in der die von den Photodioden 19, 20 gelieferten Signale verarbeitet werden. Nach Massgabe der detektierten Lichtmengen werden von der Auswerte- und Steuereinheit Steuersignale erzeugt, die an eine angeschlossene Verkippeinrichtung 22 weitergeleitet werden. Die Verkippeinrichtung 22 dient zur Verkippung der optischen Achse des Systems, die durch die Verbindungslinie der Laserlichtquelle 3 und der Umlenkeinrichtung 7 gegeben ist, in zwei zueinander senkrechten Ebenen, damit von der Detektionseinrichtung 14 festgestellte Fehllagen korrigiert werden können. Die von der Auswerte- und Steuereinheit 21 erzeugten Steuersignale können auch an eine Regelungseinrichtung 23 für den Elektromotor 11 weitergeleitet werden, beispielsweise um an Stelle der Rotation ein Pendeln des Laserlichtstrahls L um eine Solllage einzuleiten. Die Elektronik der Auswerte- und Steuereinrichtung 21 ist üblicherweise mit einer nicht näher dargestellten, an der Aussenseite des Gerätegehäuses 2 angeordneten Eingabetastatur verbunden.

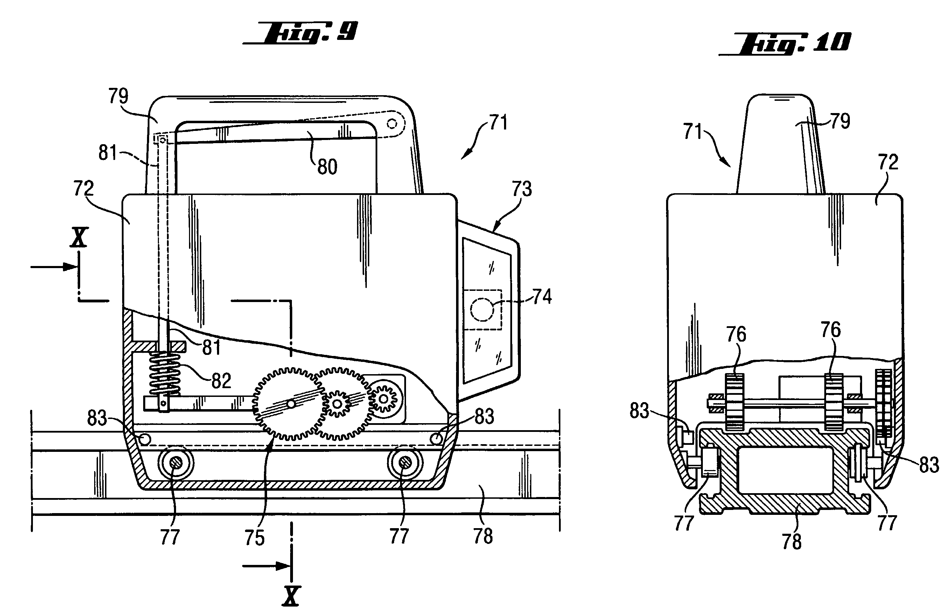

Fig. 3 zeigt ein erstes Ausführungsbeispiel eines erfindungsgemäss ausgestatteten Rotationsbaulasers, der gesamthaft mit dem Bezugszeichen 31 versehen ist. Die Darstellung beschränkt sich dabei aus Gründen der Übersichtlichkeit auf die für das Verständnis der Erfindung wesentlichen Bestandteile. Das Gerät 31 weist ein Gerätegehäuse 32 auf, an das ein Handgriff 54 angeformt ist. Im Bodenbereich des Gerätegehäuses 32 sind Aufnahmefächer 55 für Batterien oder Akkumulatoren ausgespart. Am Boden und an der dem Handgriff 54 gegenüberliegenden Seite des Gerätegehäuses 32 sind Schraubanschlüsse 56 für die Montage des Geräts 31 auf ein Stativ vorgesehen. Innerhalb des Gerätegehäuses 32 ist eine Auswerte- und Steuerelektronik 57 sowie eine Laserlichtquelle 33 angeordnet, deren Laserstrahl über eine in der optischen Achse angeordnete Optikeinheit 34, die beispielsweise den Kollimator und das λ/4 Plättchen umfasst, zu einer Umlenkeinrichtung 50, beispielsweise einem Pentaprisma, geleitet wird. Das Pentaprisma 50 ist innerhalb einer laternenartigen Gehäuseeinheit 51 angeordnet, die das Gerätegehäuse 32 überragt. Die Gehäuseeinheit 51 ist fest mit dem Gerätegehäuse 32 verbunden und weist vier Fenster 52 auf, die gegenüber der optischen Achse etwas nach aussen geneigt verlaufen. In axialer Verlängerung der optischen Achse ist die Geräteeinheit mit einem weiteren Lichtaustrittsfenster 53 ausgestattet, das beispielsweise für einen Lotstrahl vorgesehen ist, der im Pentaprisma 50 von dem abgelenkten Laserstrahl abgespalten wird. Das Pentaprisma 50 ist auf einer Plattform 46 über eine Aussparung 63 für den Laserstrahl angeordnet und bei Bedarf rotierbar. Dazu ist auf der Plattform 46 ein Zahnkranz 47 angeordnet, der mit dem Antriebsritzel 49 eines Antriebsmotors 48 zusammenwirkt. Das Pentaprisma 50 ist auf dem Zahnkranz 47 gelagert und gemeinsam mit diesem rotierbar.

Die innerhalb des Gerätegehäuses 32 angeordnete Optikeinheit 34 und die Laserlichtquelle 33 sind mit einer Neigeplatte 36 verbunden, die über eine Kippeinrichtung in zwei zueinander senkrechten Richtungen verkippbar ist. Von der Kippeinrichtung ist in Fig. 3 nur eine Neigevorrichtung 37 angedeutet, die auf einer gehäusefesten Basisplatte 38 montiert ist. Die Verkippung der Neigeplatte 36 und der damit verbundenen Optikeinheit 34 und der Laserlichtquelle 33 wird über einen Sensorblock 35 überwacht, der beispielsweise mit der Laserlichtquelle verbunden ist. Endschalter 39 dienen der Erkennung der Extremkipppositionen und zum Stoppen der Kippeinrichtung. Die Kippeinrichtung 37 für die Neigeplatte 36 ist nicht Gegenstand der vorliegenden Erfindung. Derartige Vorrichtungen sind aus dem Stand der Technik bekannt und beispielsweise auch in den Rotationsbaulasern der Anmelderin enthalten. Daher wird auf eine nähere Erläuterung des Aufbaus der Kippeinrichtung 37 und ihrer Funktion verzichtet.

Erfindungsgemäss ist der Rotationsbaulaser 31 mit einer automatisch betätigbaren Stelleinrichtung 40 ausgestattet, mit deren Hilfe das Pentaprisma 50 entlang der optischen Achse axial verstellbar ist. Dazu ruht die das Pentaprisma 50 tragende, rotierbare Plattform 46 auf drei Gewindespindeln 41, 42, 43, die mit Gewindemuffen 45 zusammenwirken, die auf der Neigeplatte 36 angeordnet sind. Die mit einem Innengewinde ausgestatteten, aussenverzahnten Gewindemuffen sind über einen Stellmotor 44 rotierbar, wodurch die Gewindespindeln 41 - 43 axial verstellt werden.

In der in Fig. 4 dargestellten Draufsicht auf die Neigeplatte 36 sind die Gewindespindeln 41 - 43 geschnitten dargestellt. Die Gewindespindeln 41 - 43 sind durch zentrische Bohrungen der mit einem Innengewinde versehenen Gewindemuffen 45 geführt. Die drei Gewindemuffen 45 sind über den Stellmotor 44 synchron antreibbar. Dazu sind zwischen den mit einer Aussenverzahnung versehenen Gewindemuffen 45 Zwischenzahnräder 60, 61 angeordnet. Der Antrieb erfolgt über ein auf der Welle des Stellmotors 44 sitzendes Antriebszahnrad 59. Die Gewindemuffen 45 befinden sich mit den Zwischenzahnrädern 60, 61 derart in Eingriff, dass zwischen der Plattform 46 und der Neigeplattform 36 die gleichen Gewindelängen eingehalten werden, damit die axiale Verstellung zwängungsfrei verläuft. Ebenfalls ersichtlich in Fig. 4 ist eine axiale Bohrung 62 in der Neigeplattform 36, deren Durchmesser derart gewählt ist, dass der Laserstrahl ohne Randbeugungserscheinungen durchtreten kann.

Fig. 5 zeigt eine Draufsicht der das Pentaprisma 50 tragenden Plattform 46. Die Gewindespindeln 41 - 43 sind an den Schraubpositionen 58 fest in die Plattform 46 eingeschraubt. Die axiale Verstellung der Plattform 46 erfolgt durch Rotation der Gewindemuffen 45, die zu einer axialen Verschiebung der die Plattform 46 tragenden Gewindespindeln 41 - 43 führt. Ebenfalls dargestellt ist der Antrieb zur Rotation des Pentaprismas 50 um die optische Achse. Dazu wirkt der Zahnkranz 47 mit dem Antriebsritzel 49 des Antriebsmotors 48 zusammen.

Während in Fig. 3 das Pentaprisma etwa in der Mitte seiner axialen Verstellbarkeit dargestellt ist, zeigt Fig. 6 die Stelleinrichtung 40 mit dem Pentaprisma 50 in seiner am weitesten vom Gerätegehäuse 32 entfernten Lage. Diese Lage ist durch die Länge der Gewindespindeln 40 - 43 und die Höhe der seitlichen Lichtaustrittsfenster 52 der Geräteeinheit 51 vorgegeben. Vorzugsweise beträgt die Höhe der seitlichen Lichtaustrittsfenster etwa 150 mm bis etwa 160 mm. Ausgehend von seiner Mittenlage besteht dabei für das Pentaprisma 50 eine ausreichend grosse Verstellmöglichkeit in beide axialen Richtungen, die im angegebenen Fall etwa ± 65 mm beträgt.

Fig. 7 und 8 zeigen das Pentaprisma 50 in seinen beiden Extremlagen, wobei zusätzlich die grösstmögliche Verkippung der Neigeplatte in einer Kippebene angedeutet ist. Aus den beiden Darstellungen ist ersichtlich, dass die Neigung der seitlichen Lichtaustrittsfenster 52 der Gehäuseeinheit 51 nach aussen gerade derart gewählt ist, dass in beiden axialen Extrempositionen des Pentaprismas 50, trotz Verkippung kein Bauteil am Lichtaustrittsfenster 52 bzw. am Gerätegehäuse 32 ansteht. Das Ausführungsbeispiel des Rotationsbaulasers in den Fig. 3 - 8 am Beispiel eines Geräts mit feststehender, laternenartiger Geräteeinheit 51 erläutert worden. Es kann auch eine Gehäuseeinheit vorgesehen sein, die gemeinsam mit dem Pentaprisma rotierbar ist. In diesem Fall sind keine grossflächigen seitlichen Lichtaustrittsfenster erforderlich. Es genügt eine schlitzartige Öffnung, die sich über die Höhe der Geräteeinheit erstreckt und mit dem Strahlengang des Laserstrahls in Übereinstimmung gebracht ist.

Das in Fig. 9 und 10 dargestellte Ausführungsbeispiel eines Rotationsbaulasers ist gesamthaft mit dem Bezugszeichen 71 versehen. Das Gerät 71 ist in seiner liegenden Position dargestellt, wie sie insbesondere zur Anzeige von vertikalen Ebenen erforderlich ist. Hinsichtlich des grundsätzlichen Aufbaus entspricht das Gerät 71 im wesentlichen den aus dem Stand der Technik bekannten Geräten. In der dargestellten liegenden Position ragt die das Pentaprisma 74 beherbergende Gehäuseeinheit 73 seitlich vom Gerätegehäuse 72 ab. Der Unterschied zu den bekannten Rotationsbaulasern besteht in einer Stelleinrichtung 75 zur axialen Verstellung der Lage des Pentaprismas 74. Gemäss dem dargestellten Ausführungsbeispiel ist die Stelleinrichtung 75 durch automatisch motorisch antreibbare Antriebsrollen 76 und eine Schiene 78 gebildet, die parallel zur optischen Achse ausgerichtet ist. Die axiale Verstellung entlang der Schiene 78 erfolgt durch die im Gerätegehäuse 72 integrierten, motorisch antreibbaren Antriebsrollen 76. Die Antriebsrollen 76 können Reibräder sein oder eine Aussenverzahnung aufweisen. Mitlaufende Stützrollen 77, die Teile der Schiene umgreifen, sorgen für eine ausreichend grosse Anpresskraft. Die Anpressung erfolgt über die Kraft einer Feder 82. Ein im Handgriff 79 des Gerätegehäuses 72 integrierter Auslösehebel 80 wirkt über ein Gestänge 81 auf die Feder 82 und dient zum Lösen des Kraftschlusses, um das Gerät 71 in die Schiene 78 einführen bzw. wieder davon abnehmen zu können. Dieser Auslösehebel 80 ist derart in den Handgriff 79 integriert, dass er nur betätigt werden kann, wenn man den Handgriff 79 umfasst. Damit ist eine Einhandbedienung beim Einführen des Geräts 71 ermöglicht, und ein unbeabsichtigtes Auslösen der Arretierung führt nicht sofort zu einem Absturz des Geräts 71 von der Schiene 78. Endesensoren 83 erfassen das jeweilige Ende der Schiene 78, damit das Gerät 71 nicht über die Längsenden der Schiene 78 hinaus bewegt werden kann. Das Getriebe für die axiale Verstellung des Rotationsbaulasers 71 ist vorzugsweise selbsthemmend, sodass das Gerät 71 auch mit vertikal angeordneter Schiene 78 betrieben werden kann. Die Schiene 78 kann auch Standfüsse aufweisen oder als Teil einer Wandhalterung ausgebildet sein.

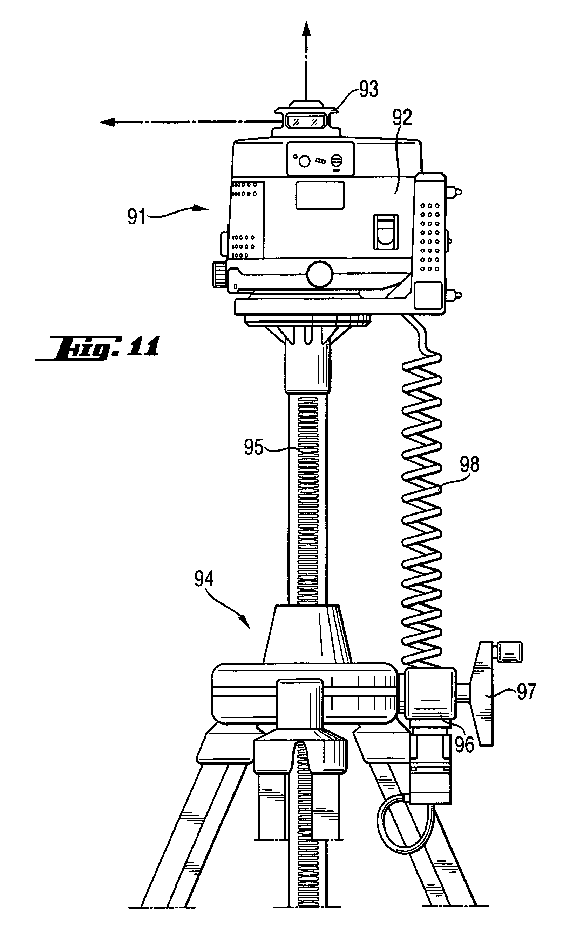

Das in Fig. 11 dargestellte Ausführungsbeispiel des erfindungsgemässen Rotationsbaulasers ist gesamthaft mit dem Bezugszeichen 91 versehen. Es unterscheidet sich von den vorigen Ausführungsbeispielen insbesondere dadurch, dass die Aktuatoren für die axiale Verstellung des Pentaprismas ausserhalb des Gerätegehäuses 92 angebracht sind. In dem dargestellten Ausführungsbeispiel bilden der Rotationsbaulaser 91 und ein Stativ 94 für die axiale Verstellung des innerhalb der Gehäuseeinheit 93 angeordneten Pentaprismas eine Einheit. Dazu ist das Stativ 94 mit einer Antriebseinheit 96 zur Höhenverstellung der Stativstange 95 ausgestattet. Die Verbindung des Rotationsbaulasers 91 mit der Antriebseinheit 96 zur Übermittlung der Steuersignale von der innerhalb des Gerätegehäuses angeordneten Auswerte- und Steuereinheit erolgt über eine Steckverbindung oder, wie dargestellt, mittels einer Kabelverbindung 98. Die Antriebseinheit 96 (Motor und Getriebeblock) ist als Baugruppe an den Kurbeltrieb 97 des Stativs 94 angefügt. Erfolgt der mechanische Kraftschluss zur Stativstange 95 über eine Rutschkupplung, erfolgt die Grobverstellung zunächst, wie bisher, von Hand. Dieses modulare Konzept kommt Benützern entgegen, die eine nachträgliche Aufrüstung ihrer zunächst in einer einfacheren Version vorliegenden Rotationsbaulaser 91 wünschen.

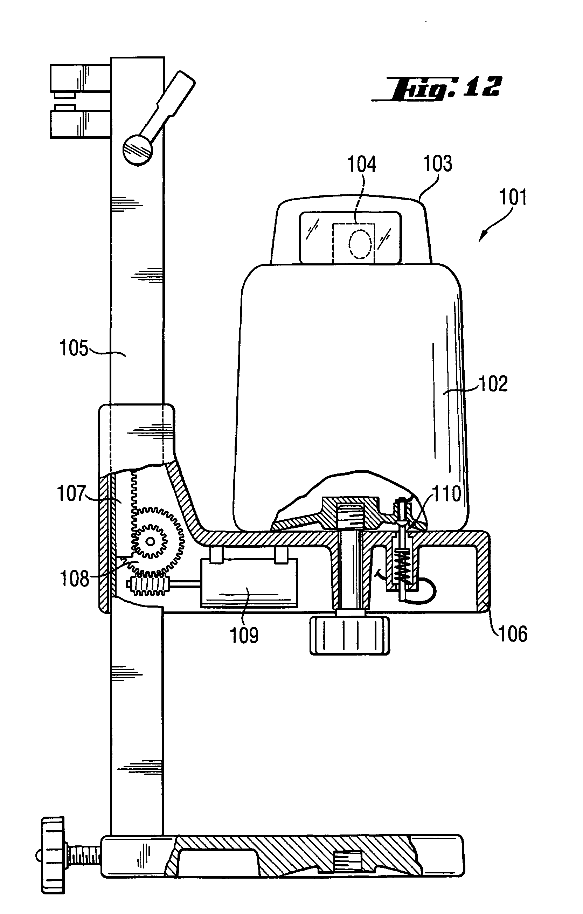

Das in Fig. 12 dargestellte Ausführungsbeispiel des erfindungsgemässen Rotationsbaulasers, das gesamthaft das Bezugszeichen 101 trägt, unterscheidet sich im wesentlichen nur durch die Kupplung zur Signalübertragung von dem anhand von Fig. 11 erläuterten Rotationsbaulaser. Der Rotationsbaulaser 101 weist wiederum ein Gerätegehäuse 102 auf, in dem alle wesentlichen Komponenten für den Betrieb des Geräts untergebracht sind. Das Pentaprisma 104 zur Umlenkung des Laserstrahls ist in einer das Gerätegehäuse 102 überragenden Gehäuseeinheit 103 angeordnet und um die optische Achse rotierbar. Das Gerät 101 ist auf einer Plattform 106 angeordnet, die bei Bedarf über einen automatisch betreibbaren Motor 109 und einen Stelltrieb 107, 108 entlang einer beispielsweise an einer Wand montierten Schiene 105 axial verstellbar ist. Die signalmässige Kopplung des Rotationsbaulasers 101 und der Plattform erfolgt über eine Steckverbindung, die in Fig. 12 durch das Bezugszeichen 110 angedeutet ist. Derartige Steckverbindungen sind hinlänglich bekannt, sodass eine nähere Erläuterung an dieser Stelle entfallen kann. Wesentlich an dem dargestellten Ausführungsbeispiel der Erfindung ist die automatische axiale Höhenverstellbarkeit des Umlenkprismas 104 - zusammen mit dem auf der Plattform 106 angeordneten Rotationsbaulaser 101 - wenn eine Fehllage detektiert wird und durch die Auswerte- und Steuereinheit entsprechende Steuersignale generiert werden, die zur Betätigung der motorischen Stelleinrichtungen dienen.

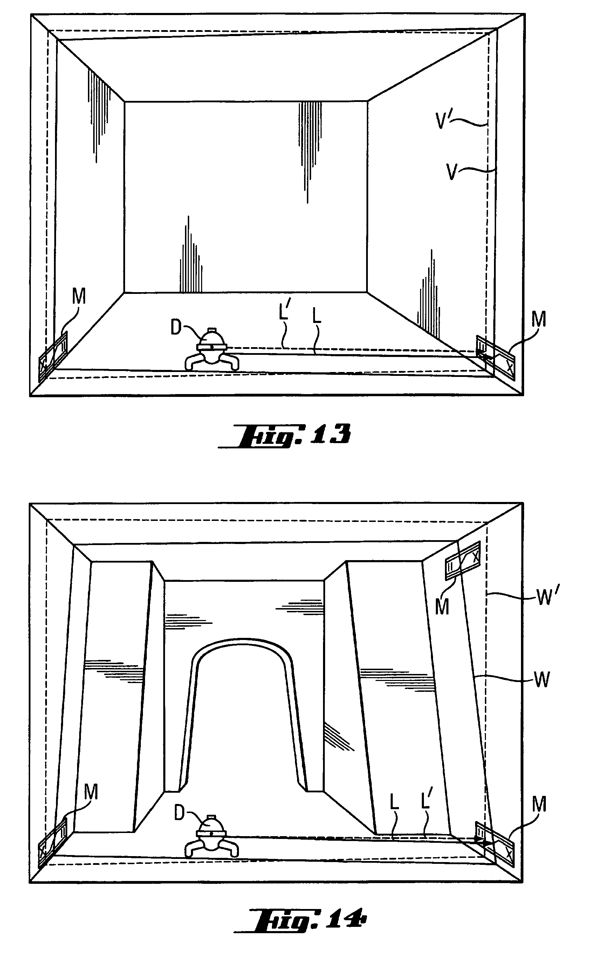

Fig. 13 zeigt den häufigsten Anwendungsfall für einen Rotationsbaulaser, in dem gefordert ist, eine vertikale Ebene darzustellen, die durch zwei Fluchtpunkte in verschiedenen Richtungen zum Gerät gegeben ist. Die beiden Fluchtpunkte sind durch die Mittenbereiche der beiden Zielmarken M gegeben. Der Rotationsbaulaser kann eine axiale Verschiebbarkeit der Umlenkeinrichtung gemäss einem der zuvor erläuterten Ausführungsbeispiele aufweisen und ist daher allgemein mit dem Bezugszeichen D bezeichnet. Die Zielmarken sind innerhalb eines vorgegebenen Toleranzfeldes, beispielsweise ± 45° zur Horizontalen, beidseits des Geräts D angeordnet. Der emittierte Laserstrahl L' und die von ihm aufgespannte vertikale Ebene V' weichen zunächst von der Solllage ab. Zur korrekten Einstellung werden die axiale Stelleinrichtung und die Verkippeinrichtung für die Verkippung der optischen Achse in eine Ebene benötigt. Weisen die Abweichungen von der Mittenlage des Laserstrahls L' auf der Zielmarkierung M gleiches Vorzeichen der Abweichung auf, erfolgt zunächst eine axiale Verschiebung der Umlenkeinrichtung für den Laserstrahl L'. Sobald die Abweichung auf einer der Zielmarkierungen das Vorzeichen wechselt, wird intermittierend oder auch gleichzeitig die Verkippeinrichtung und die axiale Stelleinrichtung aktiviert, bis der Laserstrahl L die Mittenposition auf beiden Zielmarken M erreicht hat und die Solllage der vertikalen Ebene V erreicht ist, die in Fig. 13 mit einer durchgehenden Linie angedeutet ist. Es versteht sich, dass für die Erkennung der Abweichung des Laserstrahls von der Mittenlage der Zieleinrichtung diese gegenüber dem anhand von Fig. 2 erläuterten Ausführungsbeispiel geringfügig modifiziert sein muss. Dies erfolgt durch das Vorsehen weiterer reflektierender und phasenverschiebender Bereiche an den Bereichen der Längsenden der Zielmarkierung, wie es beispielsweise in der EP-A-0 854 351 beschrieben ist.

Fig. 14 zeigt den Anwendungsfall, in dem mit dem Rotationsbaulaser D eine allgemeine, windschiefe Ebene dargestellt werden soll, die durch drei am Bauwerk vorgegebene Punkte verlaufen soll. Dazu sind am Bauwerk drei Zielmarken M angeordnet, die einen Winkelabstand von wenigstens 45° voneinander aufweisen. Der Laserstrahl L' des aufgestellten Rotationsbaulasers D und die von ihm aufgespannte Ebene, die in Fig. 14 strichliert angedeutet ist, weist zunächst nicht die gewünschte Lage auf. Daher ist zur Einstellung der korrekten Solllage eine axiale Verstellung der Lage der Umlenkeinrichtung für den Laserstrahl und eine Verkippung der optischen Achse in zwei zueinander senkrecht verlaufenden Ebenen erforderlich. Dazu erfolgt alternierend eine axiale Verstellung und eine Verkippung des Laserstrahls L' und der von ihm aufgespannten Ebene W' in die eine oder andere Richtung, bis der Laserstrahl L alle drei Zielmarken an der Mittenposition trifft und die windschiefe Ebene W in ihrer Solllage darstellbar ist, was in Fig. 14 durch ausgezogene Linien angedeutet ist. Zielmarken M, die in analoger Weise zu den Zielmarken gemäss Fig. 13 modifiziert sind, erleichtern die Einstellung der Solllage.

Erreicht der Rotationsbaulaser D während der axialen Verstellung und der Verkippung eine Grenze des Einstellbereiches, dann gibt das Gerät D optische und/oder akkustische Warnsignale ab. Auch im Fall, dass vom Laserstrahl L' bzw. der innerhalb des Geräts D angeordneten Detektionseinrichtung eine Kombination von Marken erfasst wird, die zu einer Überbestimmung und damit zu widersprüchlichen Ergebnissen führt, ist das Gerät D mit optischen und/oder akkustischen Anzeigen versehen, um den Anwender auf diese Situation aufmerksam zu machen.

## Patentansprüche

1. Rotationsbaulaser mit einer innerhalb eines Gerätegehäuses (2; 32; 72; 92; 102) angordneten Lichtquelle (3; 33) zur Erzeugung eines Laserstrahls (L) und einer Umlenkeinrichtung (7; 50; 74; 104) für den Laserstrahl, die motorisch um eine Drehachse, die vorzugsweise mit der optischen Achse zusammenfällt, rotierbar ist und in einer Gehäuseeinheit (10; 51; 73; 93; 103) angeordnet ist, welche das Gerätegehäuse (2; 32; 72; 92; 102) wenigstens teilweise überragt und wenigstens ein Lichtaustrittsfenster (13; 52) für den Laserstrahl aufweist, mit einer Detektionseinrichtung (14) für von einer Anzeigemarke (24) reflektiertes und durch das Lichteintrittsfenster (13; 52) in die Gehäuseeinheit (10; 51; 73; 93; 103) eingestrahltes Laserlicht (R), und mit einer mit der Detektionseinrichtung (14) verbundenen Auswerte- und Steuereinheit (21), mit der nach Massgabe des detektierten rekflektierten Laserlichts (R) Steuersignale für Verkippeinrichtungen (22; 37) zur Verkippung der Drehachse der Umlenkeinrichtung (7; 50; 74; 104) erzeugbar sind, **dadurch gekennzeichnet, dass** innerhalb der Gehäuseeinheit (10; 51; 73; 93; 103) eine in der Richtung der Drehachse axial höhenverstellbare Plattform (8; 46; 106) mit der Umlenkeinrichtung (7; 50; 74; 104) vorhanden ist, und dass automatisch betätigbare Stelleinrichtungen (40; 75; 96; 107 - 109) vorgesehen sind, mit deren Hilfe die Umlenkeinrichtung (7; 50; 74; 104) für den Laserstrahl (L) nach Massgabe des detektierten, von der Anzeigemarke (24) reflektierten Laserlichts (R) gegenüber einer Ausgangsstellung axial verstellbar ist.

2. Rotationsbaulaser nach Anspruch 1, **dadurch gekennzeichnet, dass** die automatisch betätigbaren Stelleinrichtungen ein motorisch höhenverstellbares Stativ (94; 105) umfassen, dessen Stelltrieb (95, 96; 107 - 109) durch die von der Auswerte- und Steuereinheit (21) gelieferten Steuersignale betreibbar ist.

3. Rotationsbaulaser nach Anspruch 2, **dadurch gekennzeichnet, dass** das Stativ eine mit Anschlusskontakten (110) versehene Montageplatte (106) aufweist, deren Anschlusskontakte (110) bei der Montage des Baulasers (101) auf der Montageplatte (106) mit korrespondierend am Gerätegehäuse (102) vorgesehenen Steckkontakten verbindbar sind, über die der Stelltrieb (107 - 109) des Stativs oder dergleichen (94; 105) mit der Auswerte- und Steuereinheit (21) und gegebenenfalls mit einer Energieversorgung verbindbar ist.

4. Rotationsbaulaser nach Anspruch 1, **dadurch gekennzeichnet, dass** die automatisch betätigbaren Stelleinrichtungen (75) eine Schiene (78) umfassen, auf der das Gerätegehäuse (72) derart montierbar ist, dass die optische Achse im wesentlichen parallel zur Schiene (78) verläuft, wobei das Gerätegehäuse (72) nach Massgabe der von der Auswerte- und Steuereinheit (21) gelieferten Steuersignale motorisch entlang der Schiene (78) versetzbar ist.

5. Rotationsbaulaser nach Anspruch 4, **dadurch gekennzeichnet, dass** Stützrollen (77) und motorisch betreibbare Antriebsrollen (76) vorgesehen sind, die mit der Schiene (78) zusammenwirken und durch die Steuersignale der Auswerte- und Steuereinheit (21) betreibbar sind.

6. Rotationsbaulaser nach Anspruch 1, **dadurch gekennzeichnet, dass** die Umlenkeinrichtung (50) für den Laserstrahl auf einer Plattform (46) angeordnet ist, die nach Massgabe der Steuersignale der Auswerte- und Steuereinheit (21) axial verstellbar ist.

7. Rotationsbaulaser nach Anspruch 6, **dadurch gekennzeichnet, dass** die Gehäuseeineheit (51) mit transparenten Mantelflächen ausgebildet und fest mit dem Gerätegehäuse (32) verbunden ist und dass die Plattform (46) innerhalb der Gehäuseeinheit (51) höhenverstellbar ist.

8. Rotationsbaulaser nach Anspruch 7, **dadurch gekennzeichnet, dass** der axiale Verstellweg etwa ± 65 mm gegenüber einer Mittenlage beträgt.

9. Rotationsbaulaser nach Anspruch 8, **dadurch gekennzeichnet, dass** die Gehäuseeinheit (51) vier Lichtaustrittsfenster (52) besitzt, die sich im wesentlichen in axiale Richtung erstrecken und eine Höhe aufweisen, die etwa 150 mm bis etwa 160 mm beträgt.

10. Rotationsbaulaser nach Anspruch 9, **dadurch gekennzeichnet, dass** die Gehäuseeinheit (51) ein im wesentlichen senkrecht zur optischen Achse verlaufendes weiteres Lichtaustrittsfenster (53) aufweist.

11. Rotationsbaulaser nach einem der Ansprüche 6 - 10, **dadurch gekennzeichnet, dass** die Plattform (46) für die Umlenkeinrichtung (50) auf drei Punkten abgestützt ist, wobei wenigstens eine der Abstützungen durch eine mit einem Stellmotor (44) zusammenwirkende, axial angeordnete Gewindespindel (41) gebildet ist.

12. Rotationsbaulaser nach Anspruch 11, **dadurch gekennzeichnet, dass** die Plattform (46) für die Umlenkeinrichtung (50) auf drei Gewindespindeln (41, 42, 43) angeordnet ist, die synchron von einem über die Auswerte- und Steuereinheit (21) steuerbaren Stellmotor (44) antreibbar sind.

13. Rotationsbaulaser nach einem der vorangehenden Ansprüche, **dadurch gekennzeichnet, dass** am Gerätegehäuse (32) eine Eingabetastatur vorgesehen ist, die mit der Auswerte- und Steuereinheit (21) verbunden ist.

14. Rotationsbaulaser nach einem der vorangehenden Ansprüche, **dadurch gekennzeichnet, dass** innerhalb des Gerätegehäuses eine weitere Laserlichtquelle und eine zweite, der weiteren Laserlichtquelle zugeordnete, rotierbare Umlenkeinrichtung angerdnet sind, wobei die zweite Umlenkeinrichtung für den Laserstrahl in einer zweiten Gehäuseeinheit angeordnet ist, welche das Gerätegehäuse wenigstens teilweise überragt und wenigstens ein Lichtaustrittsfenster für den Laserstrahl aufweist, welches gegenüber dem wenigstens einen Lichtaustrittsfenster der ersten Gehäuseeinheit um 90° geneigt angeordnet ist.

15. Rotationsbaulaser nach Anspruch 14, **dadurch gekennzeichnet, dass** die zweite Umlenkeinrichtung entlang ihrer Rotationsachse nach Massgabe von Steuersignalen der Auswerte- und Steuereinheit automatisch axial verstellbar ist.

16. Rotationsbaulaser nach einem der vorangehenden Ansprüche, **dadurch gekennzeichnet, dass** jede Umlenkeinrichtung (50; 74; 104) für den Laserstrahl ein Pentaprisma umfasst, mit dem der einfallende Laserstrahl wenigstens zum Teil um 90° umlenkbar ist.

17. Rotationsbaulaser nach einem der vorangehenden Ansprüche, **dadurch gekennzeichnet, dass** die automatisch betätigbaren Einrichtungen zur axialen Verstellung der Umlenkeinrichtung mit Endgebern ausgestattet sind, welche bei Erreichen der Extrempositionen optische und/oder akkustische Warnsignale auslösen.

## Claims

1. A rotary construction laser comprising a light source (3; 33) disposed inside an instrument housing (2; 32; 72; 92; 102) for producing a laser beam (L); a laser beam deflecting device (7; 50; 74; 104), which is disposed in a housing unit (10; 51; 73; 93; 103) and can be motor-driven in rotation about a rotational axis which preferably coincides with the optical axis, said housing unit (10; 51; 73; 93; 103) projecting at least partly from the instrument housing (2; 32; 72; 92; 102) and having at least one exit window (13; 52) for emergence of the laser beam; means (14) for detecting laser light (R) reflected from an indicator mark (24) and beamed through the entrance window (13; 52) into the housing unit (10; 51; 73; 93; 103); and an evaluation and control unit (21) which is connected to the detection means (14) and by means of which, in accordance with the detected reflected laser light (R), control signals can be generated for a device (22; 37) for tilting the rotational axis of the deflecting device (7; 50; 74; 104), **characterized in that**, inside the housing unit (10; 51; 73; 93; 103), there is a platform (8; 46; 106) together with the deflecting device (7; 50; 74; 104), said platform (8; 46; 106) being vertically adjustable in axial direction, i.e. in direction of the rotational axis, and **in that** automatically actuatable regulating means (40; 75; 96; 107 - 109) are provided, by means of which the device (7; 50; 74; 104) for deflecting the laser beam (L) can be adjusted in axial direction relative to a starting position in accordance with the detected laser light (R) reflected from the indicator mark (24).

2. A rotary construction laser according to Claim 1, **characterized in that** the automatically actuatable regulating means comprise a motor-operated vertically adjustable support (94; 105), the actuating drive (95, 96; 107 - 109) of which can be operated by control signals supplied by the evaluation and control unit (21).

3. A rotary construction laser according to Claim 2, **characterized in that** the support comprises a mounting plate (106) provided with connection contacts (110) and, upon fitting of the construction laser (101) on to the mounting plate (106), the connection contacts (110) can be connected to corresponding plug contacts provided on the instrument housing (102), by means of which the actuating drive (107 - 109) of the support or the like (94; 105) can be connected to the evaluation and control unit (21) and, if need be, to a power supply.

4. A rotary construction laser according to Claim 1, **characterized in that** the automatically actuatable regulating means (75) comprise a rail (78), on which the instrument housing (72) can be mounted in such a way that the optical axis runs substantially parallel to the rail (78), the instrument housing (72) being motor-driven along the rail (78) in accordance with control signals supplied by the evaluation and control unit (21).

5. A rotary construction laser according to Claim 4, **characterized in that** supporting rollers (77) and motor-operated driving rollers (76) are provided, which cooperate with the rail (78) and are operated by control signals from the evaluation and control unit (21).

6. A rotary construction laser according to Claim 1, **characterized in that** the laser beam deflecting device (50) is disposed on a platform (46) which is adjustable in axial direction in accordance with control signals from the evaluation and control unit (21).

7. A rotary construction laser according to Claim 6, **characterized in that** the housing unit (51) is formed with transparent outer surfaces and is firmly attached to the instrument housing (32) and **in that** the platform (46) is vertically adjustable within the housing unit (51).

8. A rotary construction laser according to Claim 7, **characterized in that** the axial path of adjustment is approximately ± 65 mm relative to a central position.

9. A rotary construction laser according to Claim 8, **characterized in that** the housing unit (51) has four exit windows (52) for the emergence of light, which extend substantially in axial direction and have a height of approximately 150 mm to approximately 160 mm.

10. A rotary construction laser according to Claim 9, **characterized in that** the housing unit (51) has an additional exit window (53) for the emergence of light, said additional exit window (53) extending substantially perpendicular to the optical axis.

11. A rotary construction laser according to one of Claims 6 to 10, **characterized in that** the platform (46) for the deflecting device (50) is supported at three points, at least one of the supports taking the form of an axially disposed threaded spindle (41) cooperating with a servomotor (44).

12. A rotary construction laser according to Claim 11, **characterized in that** the platform (46) for the deflecting device (50) is disposed on three threaded spindles (41, 42, 43) which can be driven synchronously by a servomotor (44) controlled by the evaluation and control unit (21).

13. A rotary construction laser according to one of the preceding claims, **characterized in that** an input keyboard is provided on the instrument housing (32) and is connected to the evaluation and control unit (21).

14. A rotary construction laser according to one of the preceding claims, **characterized in that** provided inside the instrument housing are an additional laser light source and a second rotatable deflecting device assigned to the additional laser light source, in which case the second laser beam deflecting device is disposed in a second housing unit which projects at least partly from the instrument housing and has at least one exit window for emergence of the laser beam, said window being disposed at an angle of 90° relative to the at least one exit window of the first housing unit.

15. A rotary construction laser according to Claim 14, **characterized in that** the second deflecting device is automatically adjustable in axial direction along its rotational axis in accordance with control signals from the evaluation and control unit.

16. A rotary construction laser according to one of the preceding claims, **characterized in that** each laser beam deflecting device (50; 74; 104) comprises a pentaprism, by means of which at least part of the incident laser beam can be deflected through 90°.

17. A rotary construction laser according to one of the preceding claims, **characterized in that** the automatically actuatable devices for the axial adjustment of the deflecting devices are fitted with end sensors which trigger visual and/or audible warning signals when the extreme positions are reached.

## Revendications

1. Laser rotatif pour la construction comprenant une source lumineuse (3 ; 33), disposée à l'intérieur d'un boîtier d'appareil (2 ; 32 ; 72 ; 92 ; 102) pour produire un faisceau laser (L), et un dispositif de déviation (7 ; 50 ; 74 ; 104) qui est destiné au faisceau laser, qui peut tourner de manière motorisée autour d'un axe de rotation coïncidant de préférence avec l'axe optique et qui est disposé dans un module de boîtier (10 ; 51 ; 73 ; 93 ; 103), lequel dépasse au moins en partie du boîtier d'appareil (2 ; 32 ; 72 ; 92 ; 102) et est pourvu d'au moins une fenêtre de sortie de lumière (13 ; 52) pour le faisceau laser, comprenant un dispositif de détection (14) pour une lumière laser (R) réfléchie par un repère indicateur (24) et envoyée dans le module de boîtier (10 ; 51 ; 73; 93; 103) à travers la fenêtre d'entrée de lumière (13 ; 52), et comprenant un module d'évaluation et de commande (21) qui est connecté au dispositif de détection (14) et qui, en fonction de la lumière laser détectée réfléchie (R), produit des signaux de commande pour des dispositifs de basculement (22; 37) servant à basculer l'axe de rotation du dispositif de déviation (7; 50; 74 ; 104), **caractérisé en ce qu'** à l'intérieur du module de boîtier (10; 51 ; 73; 93; 103) est prévue une plate-forme (8; 46; 106) réglable axialement en hauteur dans le sens de l'axe de rotation et munie du dispositif de déviation (7 ; 50 ; 74 ; 104), et **en ce qu'**il est prévu des dispositifs de positionnement à actionnement automatique (40; 75; 96; 107-109) servant à déplacer axialement le dispositif de déviation (7 ; 50 ; 74 ; 104) pour le faisceau laser (L) par rapport à une position initiale en fonction de la lumière laser détectée (R) réfléchie par le repère indicateur (24).

2. Laser rotatif pour la construction selon la revendication 1, **caractérisé en ce que** les dispositifs de positionnement à actionnement automatique comprennent un statif à réglage en hauteur motorisé (94 ; 105) dont le mécanisme de positionnement (95, 96 ; 107-109) peut être actionné par l'intermédiaire de signaux de commande fournis par le module d'évaluation et de commande (21).

3. Laser rotatif pour la construction selon la revendication 2, **caractérisé en ce que** le statif comporte une plaque de montage (106) pourvue de contacts de raccordement (110) qui, lors du montage du laser pour la construction (101) sur la plaque de montage (106), peuvent être raccordés à des contacts femelles qui sont prévus de manière correspondante sur le carter d'appareil (102) et qui permettent de relier le mécanisme de positionnement (107-109) du statif ou analogue (94 ; 105) au module d'évaluation et de commande (21) et le cas échéant à une alimentation en énergie.

4. Laser rotatif pour la construction selon la revendication 1, **caractérisé en ce que** les dispositifs de positionnement à actionnement automatique (75) comprennent un rail (78) sur lequel le carter d'appareil (72) peut être monté, de façon que l'axe optique s'étende sensiblement parallèlement au rail (78), le carter d'appareil (72) étant déplaçable de manière motorisée le long du rail (78) en fonction des signaux de commande fournis par le module d'évaluation et de commande (21).

5. Laser rotatif pour la construction selon la revendication 4, **caractérisé en ce qu'**il est prévu des galets d'appui (77) et des galets d'entraînement à actionnement motorisé (76) qui coopèrent avec le rail (78) et qui peuvent être actionnés par les signaux de commande du module d'évaluation et de commande (21).

6. Laser rotatif pour la construction selon la revendication 1, **caractérisé en ce que** le dispositif de déviation (50) pour le faisceau laser est disposé sur une plate-forme (46) qui est déplaçable axialement en fonction des signaux de commande du module d'évaluation et de commande (21).

7. Laser rotatif pour la construction selon la revendication 6, **caractérisé en ce que** le module de boîtier (51) est conçu avec des surfaces périphériques transparentes et solidarisé au carter d'appareil (32), et **en ce que** la plate-forme (46) est réglable en hauteur à l'intérieur du module de boîtier (51).

8. Laser rotatif pour la construction selon la revendication 7, **caractérisé en ce que** la course de déplacement axial est d'environ ± 65 mm par rapport à une position médiane.

9. Laser rotatif pour la construction selon la revendication 8, **caractérisé en ce que** le module de boîtier (51) possède quatre fenêtres de sortie de lumière (52) qui s'étendent sensiblement dans la direction axiale et possèdent une hauteur comprise entre environ 150 mm et environ 160 mm.

10. Laser rotatif pour la construction selon la revendication 9, **caractérisé en ce que** le module de boîtier (51) est pourvu d'une fenêtre de sortie de lumière supplémentaire (53) qui s'étend sensiblement perpendiculairement à l'axe optique.

11. Laser rotatif pour la construction selon une des revendications 6-10, **caractérisé en ce que** la plate-forme (46) pour le dispositif de déviation (50) prend appui sur trois points, au moins un des appuis étant formé par une tige filetée disposée axialement (41) coopérant avec un servomoteur (44).

12. Laser rotatif pour la construction selon la revendication 11, **caractérisé en ce que** la plate-forme (46) pour le dispositif de déviation (50) est disposée sur trois tiges filetées (41, 42, 43) qui peuvent être commandées de manière synchrone par un servomoteur (44) commandé par l'intermédiaire du module d'évaluation et de commande (21).

13. Laser rotatif pour la construction selon une des revendications précédentes, **caractérisé en ce que** sur le carter d'appareil (32) est prévu un clavier de saisie connecté au module d'évaluation et de commande (21).

14. Laser rotatif pour la construction selon une des revendications précédentes, **caractérisé en ce qu'**à l'intérieur du carter d'appareil sont prévus une source de lumière laser supplémentaire et un second dispositif de déviation rotatif associé à la source de lumière laser supplémentaire, le second dispositif de déviation du faisceau laser étant disposé dans un second module de boîtier qui dépasse au moins partiellement du carter d'appareil et est pourvu, pour le faisceau laser, d'au moins une fenêtre de sortie de lumière disposée avec une inclinaison de 90° par rapport à la fenêtre de sortie de lumière, au nombre d'au moins une, du premier module de boîtier.

15. Laser rotatif pour la construction selon la revendication 14, **caractérisé en ce que** le second dispositif de déviation est automatiquement déplaçable axialement le long de son axe de rotation en fonction de signaux de commande du module d'évaluation et de commande .

16. Laser rotatif pour la construction selon une des revendications précédentes, **caractérisé en ce que** chaque dispositif de déviation (50 ; 74 ; 104) pour le faisceau laser comprend un prisme pentagonal permettant de dévier le faisceau laser incident au moins en partie de 90°.

17. Laser rotatif pour la construction selon une des revendications précédentes, **caractérisé en ce que** les dispositifs à actionnement automatique pour le déplacement axial du dispositif de déviation sont équipés de fins de course qui, à l'atteinte des positions extrêmes, déclenchent des signaux d'avertissement optiques et/ou acoustiques.
